# EUROPÄISCHE PATENTSCHRIFT

(11) **EP 2 423 383 B1**
(45) Veröffentlichungstag und Bekanntmachung des Hinweises auf die Patenterteilung: **01.01.2014**
(21) Anmeldenummer: 11173542.9
(22) Anmeldetag: 12.07.2011
(51) Int. Cl.: D21G 1/02, F16C 13/00, D21G 1/00

(54) **Walze für eine Papier- oder Kartonmaschine**
Roller for a paper and/or carton machine
Rouleau pour une machine à papier ou carton

(30) Priorität: 24.08.2010 DE 102010039658
(43) Veröffentlichungstag der Anmeldung: 29.02.2012
(73) Patentinhaber: Voith Patent GmbH, 89520 Heidenheim (DE)
(72) Erfinder: van Haag, Rolf, 47647 Kerken (DE)

(56) Entgegenhaltungen:
- EP-A1- 1 731 668
- DE-A1-102007 051 395
- DE-A1-102009 018 051

## Beschreibung

Die Erfindung betrifft eine Walze, insbesondere für eine Papier- oder Kartonmaschine, mit einem umlaufenden Walzenmantel und einem feststehenden Joch, das den Walzenmantel axial durchsetzt, wobei der Walzenmantel durch den Druck in mindestens einer Druckkammer radial nach außen belastbar ist und die Druckkammer über eine Drosselstelle mit einer Druckmittelleitung verbunden ist, und wobei die Druckkammer über mindestens einen Kanal, der eine zweite Drossel aufweist, mit mindestens einem Druckraum verbunden ist, der ein veränderbares Volumen aufweist.

Derartige Walzen werden als Biegeausgleichswalzen, als schwimmende Walzen oder als Schuhwalzen zur Bildung eines Nips mit einer Gegenwalze eingesetzt. Durch den Nip wird eine faserförmige Materialbahn, in der Regel eine Papier- oder Kartonbahn geführt und im Nip mit erhöhtem Druck und gegebenenfalls erhöhter Temperatur beaufschlagt.

Die Walze und insbesondere der Walzenmantel wird im Betrieb beispielsweise durch Inhomogenitäten, Anisotropien oder Geometriefehlem, aber auch durch Papierdickenschwankungen mit Erregerkräften beaufschlagt, die ein Schwingen des Walzenmantels bewirken. Die resultierende Schwingbewegung ist in der Regel so klein, dass sie nicht unmittelbar stört. Allerdings prägen sich diese Schwingungsbewegungen nach einem längeren Zeitraum in den Walzenmantel ein, was zu einer weiteren Schwingungsverstärkung führt. Dies macht sich zum einen als akustische Schwingungen bemerkbar, also in einem erhöhten Schallpegel, kann aber auch zu periodischen Dickenschwankungen der Materialbahn führen, der so genannten Barring-Erscheinung.

In der Regel sind in einem Kalander mit einer Gegenwalze und einer besagten Walze drei besonders ausgeprägte Eigenfrequenzen messbar. Eine besonders niedrige Eigenfrequenz in der Größenordnung von 10 bis 40 Hz wird durch die Drehfrequenz der Walze oder der Gegenwalze angeregt, so dass die Walze und die Gegenwalze gleichphasig schwingen. Des Weiteren ist eine Eigenfrequenz zu messen, deren Größe bei 100 - 300 Hz liegt. Hier handelt es sich um eine gegenphasige Schwingung zwischen Walze und Gegenwalze, die vorwiegend aus der Jocheigenfrequenz herrührt. Die dritte markante Eigenfrequenz liegt bei 500 bis 800 Hz und beschreibt ebenfalls ein gegenphasiges Schwingen von Walze und Gegenwalze, wobei hier die Kontakteigenfrequenz des Mantels der Walze dominiert.

Die Schwingung des Walzenmantels wird entweder direkt oder durch ein Stützelement auf ein in der Druckkammer angeordnetes Druckmittel übertragen, das dadurch über die Drosselstelle hin- und hergeschoben wird. Dabei wird in der Drosselstelle durch Reibung dem System Schwingungsenergie entzogen, so dass eine Dämpfung der Schwingung erfolgt, Die Drosselstelle muss dabei so ausgelegt sein, dass genügend Öl über die Drosselstelle pulsieren kann.

Um eine Rückkopplung auf die Druckmittelleitung zu vermindern, ist in EP 1 731 668 A1 eine Biegeausgleichswalze vorgeschlagen worden, bei der die Druckkammer über Drosselstellen zunächst mit einem Druckraum verbunden ist, wobei der Druckraum über eine Drosselstelle an einer Druckmittelleitung angeschlossen ist Zwischen der Druckmittelleitung und der Druckkammer ist also in Reihe ein Druckraum angeordnet, der eine Isolierung der Druckmittelleitung bewirkt. Dabei kann der Druckraum eine teilweise elastische Begrenzungswand aufweisen, durch deren elastische Verformung eine weitere Schwingungsdämpfung erreicht wird.

In DE 10 2007 051 395 A1 ist vorgeschlagen, die Druckkammer einer Durchbiegungseinstellwalze mit Hilfe einer Membran in zwei Kammern aufzuteilen, wobei die einem Stützelement zugewandte Druckkammer über eine Drosselstelle mit einer Druckmittelleitung verbunden ist und die durch die elastische Wand von der Druckhammer abgetrennte Kammer mit einem kompressiblen Medium gefüllt ist. Das kompressible Medium, beispielsweise ein Gas, kann dabei über eine Anschlussleitung in die Kammer eingebracht werden. Bei dieser Lösung erfolgt zum einen eine Schwingungsdämpfung über die Hin- und Herbewegung des Druckmittels über die Drosselstelle und zum anderen durch die Bewegung der elastischen Wand, die die Druckkammer teilweise begrenzt.

Bei relativ niedrigen Frequenzen und relativ großen Schwingungsamplituden arbeiten diese Lösungen zufrieden stellend. Bei hohen Frequenzen von beispielsweise 150 bis 1000 Hz wird die Dämpferleistung jedoch relativ klein. Außerdem können sich die Jocheigenfrequenz und die Kontakteigenfrequenz des Mantels hier konträr verhalten.

Der Erfindung liegt daher die Aufgabe zugrunde, auch bei hohen Frequenzen eine gute Schwingungsdämpfung zu erreichen.

Erfindungsgemäß wird diese Aufgabe bei einer Walze der eingangs genannten Art dadurch gelöst, dass der Druckraum ein maximales Volumen von 0,025 bis 0,16 Liter aufweist.

Bei dieser Lösung kann die durch die Schwingungen des Walzenmantels bewegte Hydraulikflüssigkeit nicht nur über die Drosselstelle hin- und hergeschoben werden, sondern auch über den mindestens einen Kanal mit der zweiten Drossel in mindestens einen Druckraum, dessen Volumen sich durch die entsprechenden Druckschwankungen verändert. Ein Volumenbereich von 0,025 bis 0,16 Litern hat sich je nach Größe des Stützelementes als vorteilhaft erwiesen. Dieser doch überraschend kleine Speicherraum garantiert in Zusammenarbeit mit der zweiten Drossel bereits eine gute Dämpfung der oberen Frequenzen. Die Kanäle mit der zweiten Drossel wie auch die Drosselstelle gehen dabei direkt von der Druckkammer ab. Dabei wird eine mehrfache Schwingungsdämpfung parallel erreicht. So erfolgt eine erste Schwingungsdämpfung durch die Hin- und Herbewegung der Hydraulikflüssigkeit über der Drosselstelle, eine zweite Dämpfung durch die Hin- und Herbewegung der Hydraulikflüssigkeit durch die Kanäle und die zweite Drossel und eine dritte Dämpfung durch die Veränderung des Volumens des Druckraums, also einer elastischen Verformung. Insgesamt wird dadurch eine sehr effektive Schwingungsdämpfung erreicht, wobei durch die verschiedenen Dämpfungsmechanismen auch bei hohen Frequenzen eine gute Schwingungsdämpfung gewährleistet ist Das besondere an zwei Drosseln ist dabei, dass man über die jeweiligen Drosselwiderstände die Jocheigenfrequenz und die Kontakteigenfrequenz des Mantels weitgehend unabhängig voneinander drosselnd beeinflussen kann. Dadurch wird das Auftreten von Barring vermindert und eine Standzeit der Walze verlängert.

Es ist besonders günstig, wenn der Strömungsquerschnitt der zweiten Drossel 1 bis 2-fach so groß ist wie der Strömungsquerschnitt der Drosselstelle, Hat man einen geeigneten Strömungswiderstandswert für die Drosselstelle zu der Druckmittelleitung gefunden, so wird die Intensität der Eigenfrequenz, die aus der Jocheigenfrequenz herrührt, sehr gut vermindert. Um auch die höhere Eigenfrequenz aus der Kontakteigenfrequenz des Mantels mit der Gegenwalze entsprechend zu dämpfen ist die zweite Drossel mit einem entsprechend größeren Strömungsquerschnitt zu wählen.

Es ist besonders bevorzugt, dass die Druckkammer im Joch angeordnet ist, wobei in der Druckkammer ein Stützelement geführt ist, das durch einen Druck in der Druckkammer mit einer Anlegeseite gegen den Walzenmantel drückbar ist. Das Stützelement ist dabei in der Regel radial in der Druckkammer führbar und begrenzt eine Seite der Druckkammer. Dabei kann zwischen dem Stützelement und einer Umfangsfläche der Druckkammer eine Dichtung angeordnet sein. Das Stützelement bildet eine Seite der Druckkammer. An der Anlegeseite des Stützelements können Ölkammern ausgebildet sein, die zum Ausbilden eines Ölfilms zwischen der Anlegeseite des Stützelements und einer Innenseite des Walzenmantels dienen. Dieser Ölfilm kann beispielsweise 20 bis 50 µm dick sein und ist sehr steif, so dass darüber nahezu keine Schwingungsdämpfung erfolgt Die Schwingungen des Walzenmantels werden also direkt auf das Stützelement übertragen, das entsprechend mit dem Walzenmantel innerhalb der Druckkammer schwingt und so die Schwingung auf das in der Druckkammer angeordnete Druckmedium überträgt Das Stützelement kann als Schuh einer Schuhwalze ausgebildet sein, es können aber auch mehrere Stützelemente in entsprechend vielen Druckkammern axial nebeneinander angeordnet sein, so dass eine Durchbiegungsausgleichswalze erhalten wird, Durch die Anordnung der Druckkammer im Joch kann diese nach außen relativ gut abgedichtet werden. Dabei steht innerhalb des Jochs ohnehin ausreichend Platz zur Verfügung. Die Druckmittelleitung kann dabei beispielsweise axial durch das Joch geführt sein.

Dabei ist besonders bevorzugt, dass der Druckraum innerhalb der Druckkammer angeordnet ist. Das hat den Vorteil, eine für das Stützelement vorhandene Bohrung für einen weiteren Zweck nutzen zu können. Es muss also keine weitere Ausnehmung oder Bohrung am Joch vorgesehen werden. Außerdem ist der Einsatz eines solchen Druckraums auch bei bestehenden Walzen schnell und einfach nachrüstbar.

Alternativ ist bevorzugt, dass der Druckraum in einer Ausnehmung oder einer Bohrung im Joch zwischen den Stützelementen untergebracht ist. Dies gilt besonders für Biegeeinstellwalzen mit Stützelementen, bei denen die Bohrung für das Stützelement nicht mehr genug Raum für den Druckraum bietet. Zwischen den Stützelementen ist aber ausreichend Platz, um den Druckraum, der beispielsweise ein hydraulisch wirkender Hydrospeicher, insbesondere ein Membranspeicher, früher auch Kugeldruckspeicher genannt, sein kann, unter zu bringen, ohne damit zu dicht an den Walzenmantel zu kommen, aber trotzdem noch nah genug an der Druckkammer zu sein. Dabei ist es bevorzugt, die Bohrung für den Druckraum nicht in der gleichen Bohrungsrichtung wie die des Zylinderraums für das Stützelement vorzunehmen, um das Joch nicht zu sehr zu schwächen.

Mit Vorteil verläuft aus dem Druckraum jeweils ein Kanal zu den beiden benachbarten Druckkammern. Ein Druckraum "bedient" dann zwei Druckkammern. Der Fertigungsaufwand wird verringert, weil man ausgehend von der Bohrung für den Druckraum einfach zwei weitere Bohrungen (Kanäle) zu den Druckkammern machen muss.

Vorzugsweise ist der Druckraum durch eine bewegliche und/oder elastische Wand von einer Kammer fluiddicht getrennt, die mit einem kompressiblen Medium gefüllt ist. Dies stellt eine relativ einfache Möglichkeit dar, ein veränderbares Volumen für den Druckraum zu erzeugten. Als kompressibles Medium kann beispielsweise ein Gas, wie Luft oder Stickstoff, verwendet werden. Es ist aber auch möglich, ein elastisches Kunststoffmaterial zu verwenden. Durch das kompressible Medium können die für die Verformung und/oder Bewegung der Wand erforderlichen Kräfte beeinflusst werden, wodurch eine Einstellung auf bestimmte Frequenzen erfolgen kann, in denen eine besonders gute Dämpfung ersielt wird. Die Kammer und/oder die Wand können aber auch als mindestens ein zusätzliches Element eingesetzt sein. Die Wand kann als Elastomermembran, aber auch als dünnes Metallband oder als Kompositband, ja sogar als Kolben ausgebildet sein.

Vorzugsweise sind mehrere Druckräume in Axialrichtung der Walze nebeneinander angeordnet. Die Speicher sind dann mit verschiedenen Druckkammern verbindbar. Wenn die Druckräume zumindest teilweise unterschiedlich dimensioniert sind, und/oder die Eigenschaften der Wand bzw. des kompressiblen Mediums unterschiedlich sind, kann eine Abstimmung auf unterschiedliche Frequenzen erfolgen. Insgesamt kann damit ein sehr breites Frequenzband sehr effektiv gedämpft werden.

Vorzugsweise weist die Kammer einen Druckanschluss auf oder ist hermetisch dicht ausgebildet. Bei beiden Lösungen kann ein Gas wie beispielsweise Luft oder Stickstoff als kompressibles Medium verwendet werden. Wenn die Kammer einen Druckanschluss aufweist, ist auch eine nachträgliche Anpassung der Dämpfungseigenschaften möglich, Eine hermetisch dichte Ausbildung hat dagegen den Vorteil, dass ein nahezu wartungsfreier Betrieb möglich ist.

In einer bevorzugten Ausführungsform sind eine Anzahl und/oder eine Querschnittsfläche und/oder eine Länge der Drosselstelle und/oder der zweiten Drossel mit mindestens einem Stellelement veränderbar, das insbesondere als hydraulisches, elektrisches, magnetisches oder piezoelektrisches Stellelement ausgebildet ist. Dadurch ist es möglich, das System nachträglich auf einzelne Frequenzen abzustimmen. Es ist auch möglich, über einen bestimmten Zeitraum ein erstes Frequenzband zu dämpfen und in einem späteren Zeitraum ein weiteres Frequenzband. Insgesamt kann die Dämpfung maximiert werden, so dass sich letztlich die Standzeit der Walze verlängert.

Dabei ist besonders bevorzugt, dass mindestens ein Schwingungssensor am Walzenmantel und/oder am Joch und/oder am Stützelement und/oder in der Druckkammer angeordnet ist. Mit Hilfe dieses Schwingungssensors lässt sich die Schwingung des Walzenmantels direkt ermitteln und beispielsweise zur Ansteuerung des Stellelements verwendet werden, Dadurch ist eine Maximierung der Dämpfung möglich,

Vorzugsweise ist an der Wand ein Aktuator, insbesondere ein piezoelektrisches Element vorgesehen. Durch den Aktuator kann die Wand gezielt in Schwingungen versetzt werden, die den durch den Walzenmantel erzeugten Schwingungen entgegen gesetzt ist. Dadurch ist also eine aktive Schwingungsdämpfung möglich. Es ist auch möglich, durch den Aktuator die Steifigkeit der Wand zu beeinflussen, wodurch Einfluss auf das Dämpfungsverhalten genommen werden kann.

Die Erfindung wird im Folgenden anhand eines bevorzugten Ausführungsbeispiels in Verbindung mit den Zeichnungen beschrieben. Hierin zeigen:
- Fig. 1: einen Teilquerschnitt durch die Walze und
- Fig. 2: einen Ausschnitt aus einer dreidimensionalen Zeichnung der Walze.
- Fig. 3: einen Ausschnitt aus einer Druckraumanordnung

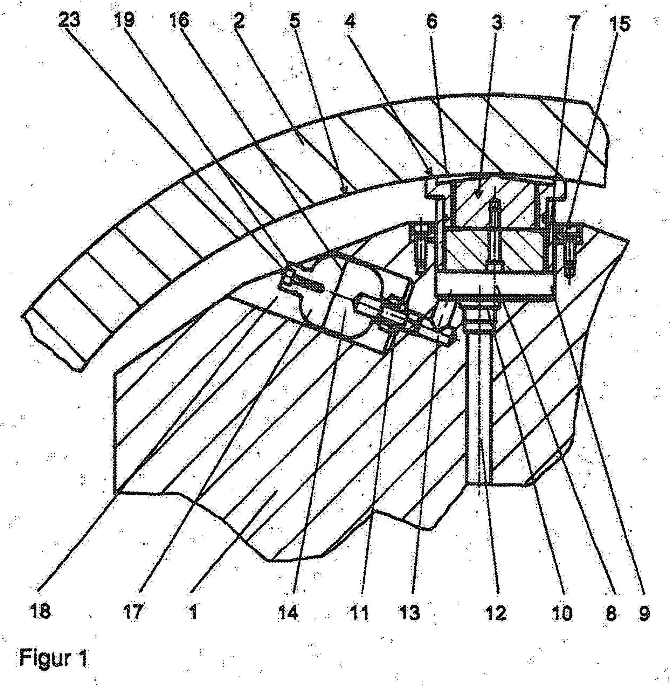

Fig. 1 zeigt im Querschnittsausschnitt eine Walze mit einem feststehenden Joch 1 und einem umlaufenden Walzenmantel 2. Das Joch 1 durchsetzt dabei den Walzenmantel 2 axial. Der Walzenmantel 2 wird mit Hilfe eines Stützelements 3 radial nach außen gedrückt. Das Stützelement 3 liegt dafür mit einer Anlegeseite 4 an einer Innenseite 5 des Walzenmantels 2 an. Das Stützelement 3 weist an seiner Anlegeseite 4 Drucktaschen 6 auf, in denen Öl zur Ausbildung eines Ölfilms zwischen der Anlegeseite 4 und der Innenseite 5 aufgenommen ist.

Das Stützelement 3 ist mit einem zylindrischen Fortsatz 7 in einer Druckkammer 8 radial beweglich geführt. Über eine Drosselstelle 10 ist die Druckkammer 8 mit einer Druckmittelleitung 12 verbunden, die durch das Joch 1 nach außen geführt ist und dazu dient, die Druckkammer 8 mit einem unter Druck stehenden Druckmittel zu versorgen.

Durch den Druck in der Druckkammer 8 wird die Lage des Stützelements 3 bzgl. des Jochs 1 festgelegt. Durch Erhöhen des Drucks in der Druckkammer 8 wird das Stützelement 3 radial nach außen gedrückt und drückt so gegen den Walzenmantel 2. Bei einer Verringerung des Drucks in der Druckkammer 8 wird das Stützelement 3 durch die Elastizität des Walzenmantels 2 bzw. durch eine Gegenwalze, die auf den Walzenmantel 2 drückt, radial nach innen bewegt. Zwischen dem Fortsatz 7 des Stützelements 3 und einer Begrenzung der Druckkammer 8 kann gegebenenfalls eine Dichtung, insbesondere eine eingeschraubte Ringdichtung 15 vorgesehen sein.

Von Begrenzungswänden der Druckkammer 8 geht ein Kanal 13 ab, der die Druckkammer 8 mit dem Druckraum 14 verbindet. Der Druckraum 14 ist in diesem Beispiel außerhalb der Zylinderbohrung 9 für das Stützelement 3 ausgebildet. Er könnte sich jedoch auch innerhalb des Druckraums 8 befinden. Er besitzt ein maximales Volumen von 0,025 bis 0,16 Litern. Der Druckraum 14 ist durch eine elastische Wand von einer Kammer 17 getrennt.

Im Kanal 13 ist eine zweite Drossel 11 vorgesehen. Bei dieser Drossel ist der Strömungswiderstand geringer als bei der Drosselstelle 10. So ist der Druckraum 14 über eine zweite Drossel 11 mit größerem Querschnitt als der Querschnitt der Drosselstelle 10 mit der Druckkammer 8. Ein bevorzugtes Verhältnis der Querschnitte von Drossel 11 zu Drosselstelle 10 ist in der Größenordnung von 1 bis 2.

Bei der in Fig. 1 gezeigten Ausführungsform ist der Druckraum 14 und die dazugehörige Kammern 17, beides in Form eines Membranspeichers, insbesondere eines Kugeldruckspeichers, in einer Bohrung 18 im Joch 1 untergebracht. Es ist auch möglich, die Druckräume und die jeweils dazugehörige Kammer in anderen Formen auszubilden.

Die Kammer 17 ist mit einem kompressiblen Medium gefüllt. Im vorliegenden Ausführungsbeispiel ist die Kammer 17 über eine Versorgungsleitung 19 mit einem gasförmigen Medium befüllbar. Dadurch kann der Druck in der Kammer 17 individuell eingestellt werden, wodurch eine Anpassung an verschiedene Schwingungsfrequenzen möglich ist. Über den Gasdruck in der Kammer 17 ist eine Anpassung an den Fluiddruck in der Druckkammer 8 erreichbar und damit die Größe des Druckraums einstellbar.

Bei einer Schwingung des Walzenmantels 2 relativ zum Joch 1 wird das relativ steif an den Walzenmantel 2 angekoppelte Stützelement 3 ebenfalls in Schwingungen versetzt und bewegt sich radial bzgl. des Jochs 1 in der Druckkammer 8. Dadurch wird das in der Druckkammer 8 befindliche Druckmittel über die Drosselstelle 10 hin- und hergeschoben. In der Drosselstelle 10 wird dem System durch Reibung Energie entzogen. Dadurch erfolgt eine Schwingungsdämpfung. Die Größe der Drosselstelle 10 hat dabei großen Einfluss darauf, bei welcher Frequenz eine wirksame Schwingungsdämpfung erfolgt. Ist die Drosselstelle 10 zu klein, kann nur wenig Öl die Drosselstelle passieren, so dass ein eventuell im Betrieb notwendiges schnelles Absenken des Mantels 2 nicht möglich ist. Wenn die Drosselstelle zu weit ist, ist auch der durch sie hervorgerufene Strömungswiderstand gering, so dass nur eine geringe Dämpfung erzielbar ist. Bei einer im Betrieb befindlichen Walze hat sich ein Gesamtquerschnitt in der Drosselstelle von 5 -10 mm² in Form von 16 Drosseibohrungen als ein gegen die Jocheigenfrequenzen besonders wirkungsvoll dämpfender Wert herausgestellt.

Doch man will mit der Walze auch die Kontakteigenfrequenzen des Mantels mit der Gegenwalze dämpfen. Alleine über die Drosselstelle 10 ist dies nicht zu erreichen. Eine Verbesserung der Schwingungsdämpfung wird mit Hilfe des zusätzlichen Druckraums 14 erreicht. An dieser Stelle gibt es zwei wesentliche Einstellmöglichkeiten für die Dämpfung der höheren Frequenzen.

Da ist an erster Stelle der Querschnitt, der zwischen dem Druckraum 14 und der Druckkammer 8 installierten zweiten Drossel zu nennen. An der gleichen wie oben genannten Walze erhielt die zweite Drossel 11 insgesamt 24 gleiche Bohrungen wie sie die Drosselstelle 10 aufwies. Dieser Querschnitt war nun ideal geeignet, auch die hohen Schwingungsamplituden der Kontakteigenfrequenz des Mantels zu mildern.

Als weitere Einsteilmöglichkeit hinzu kommt der Druck des in der Kammer 17 befindlichen Gases. Der Druckraum 14 weist durch die elastische Verformung der Wand ein veränderbares Volumen auf. Der Druckraum 14 mit der entsprechenden Kammer 17 und der Wand 16 kann individuell auf einen bestimmten Druck oder eine Frequenz abgestimmt werden. Um Gas aufzufüllen ist ein Anschluss 23 vorgesehen.

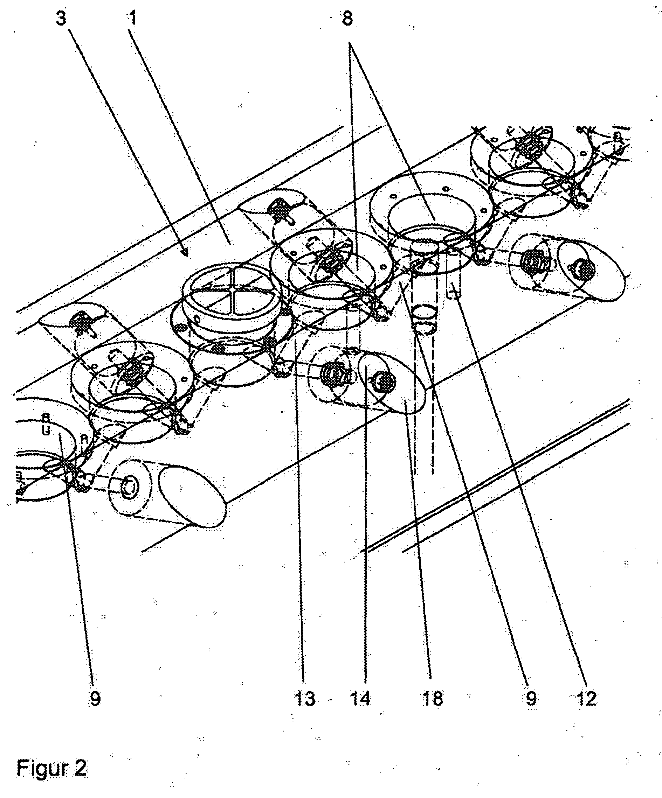

Die Bohrung 18 zur Aufnahme des Druckraums 14 ist in Figur 1 zur besseren Veranschaulichung in der gleichen Ebene gezeichnet wie das Stützelement 3. Vorteilhafter ist es jedoch in Bezug auf die Jochfestigkeit, wenn die Bohrung 18 zwischen zwei Stützelementen angeordnet ist und dann möglichst auch eine andere Richtung der Bohrungsachse aufweist als die Bohrachse der Zylinderbohrung 9 für das Stützelement 3. Ein Winkel zwischen diesen Achsen von 30 bis 60° hat sich als am besten geeignet herausgestellt. Diese Anordnung ist besonders gut in dem dreidimensionalen Walzenausschnitt der Figur 2 zu erkennen. Nur aus dieser Figur ist auch ersichtlich, dass ein Druckraum 14 mit einem V-förmig verbundenen Kanal 13 gleich mit zwei Zylinderbohrungen 9 und insofern mit zwei Druckkammern 8 verbunden ist. Das erhöht die Einstellmöglichkeiten und die Redundanz.

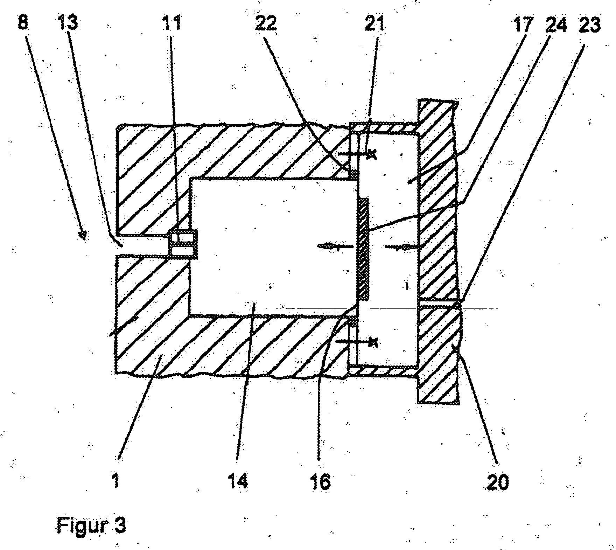

In Figur 3 ist in einer vergrößerten Schnittdarstellung ein Druckraum 14 mit einem Kanal 13 und einer Kammer 17 dargestellt, wobei zwischen dem Druckraum 14 und der Kammer 17 eine elastische Wand 16 angeordnet ist. Der Kanal 13 mündet dabei in einer Begrenzungswand der Druckkammer 8. Der Druckraum 14 steht über die zweite Drossel 11 und dem Kanal 13 direkt mit der Druckkammer 8 in Verbindung.

Der Druckraum 14 ist in dem Joch 1 ausgebildet, über dem ein Zusatzelement 20 eingesetzt ist. Das Zusatzelement 20 weist einen Hohlraum auf, der die Kammer 17 bildet Die Kammer 17 weist an der dem Druckraum 14 zugewandten Seite des Zusatzelements 20 die Wand 16 auf, die bei diesem Ausführungsbeispiel durch ein Metallband gebildet ist. Die Wand 16 trennt also die Kammer 17 vom Druckraum 14. Zwischen dem Zusatzelement 20 und dem Joch 1 ist dabei mindestens eine Dichtung 22 angeordnet.

In einer vom Druckraum 14 abgewandten Seite weist das Zusatzelement 20 einen Anschluss 23 auf, durch den ein kompressibles Medium in die Kammer 17 eingebracht werden kann. Dadurch wird die Schwingfähigkeit der Wand 16 beeinflusst. Das Zusatzelement ist mit Hilfe von nur symbolisch dargestellten Befestigungsmitteln 21 am Joch 1 befestigt.

Auf der Wand 16 ist ein als Piezokeramik ausgebildeter Aktuator 24 angebracht, der dazu dient, die Wand 16 in Schwingungen zu versetzen, deren Richtung durch Pfeile gekennzeichnet sind. Neben dem aktiven Einbringen einer Schwingung kann der Aktuator 24 aber auch dazu benutzt werden, die Steifigkeit der Wand 16 zu beeinflussen.

Durch den Aktuator 24 kann also das Volumen, der Kammer 17 bzw. des Druckraums 14 aktiv verändert werden. Dadurch kann der Pulsationsdämpfer, der durch die Druckräume, die Kanäle, die zweite Drossel, die Wände und die Kammern gebildet wird, gezielt beeinflusst werden und auf die gewünschte Frequenz abgestimmt werden. Über Messsensoren kann dabei die Schwingung des Walzenmantels bzw. des Stützelements oder auch die Druckänderungen in der Druckkammer 8 gemessen werden, wobei diese zur Abstimmung des Pulsationsdämpfers verwendet werden.

Dabei kann gegebenenfalls zusätzlich vorgesehen werden, dass die Größe der Drosselstelle 10 oder der zweiten Drossel 11, also deren freier Querschnitt, mit Hilfe von Stellelementen beeinflusst wird. Mit weiteren Stellelementen kann dafür gesorgt werden, dass einzelne Kanäle verschlossen werden, so dass darüber die Dämpfungseigenschaften beeinflussbar sind. Die Bewegung der Stellelemente kann dabei in Abhängigkeit der jeweils direkt gemessenen Schwingungen erfolgen, Auch eine Ansteuerung der Stellelemente von außen kann möglich sein.

Jeder Druckraum bildet mit einer Kammer, einem Kanal, einer zweiten Drossel und einer Wand zwischen der Kammer und dem Druckraum jeweils einen Pulsationsdämpfer, der auf eine bestimmte Frequenz abgestimmt werden kann. Durch das Vorsehen mehrerer derartiger Pulsationsdämpfer, die jeweils auf eine bestimmte Frequenz abgestimmt sind, kann dabei eine Dämpfung über ein sehr breites Frequenzband erfolgen.

### Bezugszeichenliste

- 1: Joch
- 2: Walzenmantel
- 3: Stützelement
- 4: Anlegeseite des Stützelementes
- 5: Innenseite 5 des Walzenmantels
- 6: Drucktasche
- 7: Zylindrischer Fortsatz:
- 8: Druckkammer
- 9: Zylinderbohrung
- 10: Drosselstelle.
- 11: Zweite Drossel
- 12: Druckmittelleitung
- 13: Kanal
- 14: Druckraum
- 15: Ringdichtung
- 16: Wand
- 17: Kammer
- 18: Bohrung
- 19: Versorgungsleitung
- 20: Zusatzelement
- 21: Befesttgungsmitte!
- 22: Dichtung
- 23: Anschluss
- 24: Aktuator

## Patentansprüche

1. Walze, insbesondere für eine Papier- oder Kartonmaschine, mit einem umlaufenden Walzenmantel (2) und einem feststehenden Joch (1), das den Walzenmantel (2) axial durchsetzt, wobei der Walzenmantel (2) durch den Druck in mindestens einer Druckkammer (8) radial nach außen belastbar ist und die Druckkammer (8) über eine Drosselstelle (10) mit einer Druckmittelleitung (12) verbunden ist, und wobei die Druckkammer (8) über mindestens einen Kanal (13), der eine zweite Drossel (11) aufweist, mit mindestens einem Druckraum (14) verbunden ist, der ein veränderbares Volumen aufweist, **dadurch gekennzeichnet, dass** der Druckraum (14) ein maximales Volumen von 0,025 bis 0,16 Liter aufweist.

2. Walze nach Anspruch 1, **dadurch gekennzeichnet, dass** der Strömungsquerschnitt der zweiten Drossel (11) bis 2-fach so groß ist wie der Strömungsquerschnitt der Drosselstelle (10).

3. Walze nach Anspruch 1 oder 2, **dadurch gekennzeichnet, dass** die Druckkammer (8) im Joch (1) angeordnet ist, wobei in der Druckkammer (8) ein Stützelement (3) geführt ist, das durch einen Druck in der Druckkammer (8) mit einer Anlegeseite (4) gegen den Walzenmantel (2) drückbar ist.

4. Walze nach einem der Ansprüche 1 bis 3, **dadurch gekennzeichnet, dass** der Druckraum (14) innerhalb der Druckkammer (8) angeordnet ist.

5. Walze nach Anspruch 3, **dadurch gekennzeichnet, dass** der Druckraum (14) in einer Ausnehmung oder einer Bohrung (18) im Joch (1) zwischen den Stützelementen (3) untergebracht ist.

6. Walze nach Anspruch 5, **dadurch gekennzeichnet, dass** aus dem Druckraum (14) jeweils ein Kanal (13) zu den beiden benachbarten Druckkammern (8) verläuft.

7. Walze nach einem der Ansprüche 1 bis 6, **dadurch gekennzeichnet, dass** der Druckraum (14) durch eine bewegliche und/oder elastische Wand (16) von einer Kammer (17) fluiddicht getrennt ist, die mit einem kompressiblen Medium gefüllt ist.

8. Walze nach einem der Ansprüche 1 bis 5, **dadurch gekennzeichnet, dass** mehrere Druckräume (14) in Axialrichtung der Walze nebeneinander angeordnet sind.

9. Walze nach einem der Ansprüche 7 bis 8, **dadurch gekennzeichnet, dass** die Kammer (17) einen Anschluss (23) aufweist oder hermetisch dicht ausgebildet ist.

10. Walze nach einem der Ansprüche 1 bis 9, **dadurch gekennzeichnet, dass** eine Anzahl und/oder eine Querschnittsfläche und/oder eine Länge der Drosselstelle (10) und/oder der zweiten Drossel (11) mit mindestens einem Stellelement veränderbar ist, das insbesondere als hydraulisches, elektrisches, magnetisches oder piezoelektrisches Stellelement ausgebildet ist.

11. Walze nach einem der Ansprüche 1 bis 10, **dadurch gekennzeichnet, dass** mindestens ein Schwingungssensor am Walzenmantel (2) und/oder am Joch (1) und/oder am Stützelement und/oder in der Druckkammer (8) angeordnet ist.

12. Walze nach einem der Ansprüche 7 bis 11, **dadurch gekennzeichnet, dass** an der Wand (16) ein Aktuator (24), insbesondere ein piezoelektrisches Element vorgesehen ist.

## Claims

1. Roll, in particular for a paper or board machine, having a revolving roll shell (2) and a stationary yoke (1), which passes axially through the roll shell (2), it being possible for the roll shell (2) to be loaded radially towards the outside by the pressure in at least one pressure chamber (8), and the pressure chamber (8) being connected via a throttling point (10) to a pressure medium line (12), and the pressure chamber (8) being connected via at least one channel (13), which has a second throttle (11), to at least one pressure chamber (14) which has a variable volume,
**characterized in that**
the pressure chamber (14) has a maximum volume of 0.025 to 0.16 litres.

2. Roll according to Claim 1, **characterized in that** the flow cross section of the second throttle (11) is 1 to 2 times as large as the flow cross section of the throttling point (10).

3. Roll according to Claim 1 or 2, **characterized in that** the pressure chamber (8) is arranged in the yoke (1), a supporting element (3) which can be forced with a contact side (4) against the roll shell (2) by a pressure in the pressure chamber (8) being guided in the pressure chamber (8).

4. Roll according to one of Claims 1 to 3, **characterized in that** the pressure chamber (14) is arranged within the pressure chamber (8).

5. Roll according to Claim 3, **characterized in that** the pressure chamber (14) is accommodated in a recess or in a bore (18) in the yoke (1), between the supporting elements (3).

6. Roll according to Claim 5, **characterized in that** in each case a channel (13) runs from the pressure chamber (14) to the two adjacent pressure chambers (8).

7. Roll according to one of Claims 1 to 6, **characterized in that** the pressure chamber (14) is separated in a fluid-tight manner by a movable and/or elastic wall (16) from a chamber that is filled with a compressible medium.

8. Roll according to one of Claims 1 to 5, **characterized in that** a plurality of pressure chambers (14) are arranged beside one another in the axial direction of the roll.

9. Roll according to either of Claims 7 and 8, **characterized in that** the chamber (17) has a connection (23) or is designed to be hermetically sealed.

10. Roll according to one of Claims 1 to 9, **characterized in that** a number and/or a cross-sectional area and/or a length of the throttling point (10) and/or the second throttle (11) can be varied by at least one actuating element, which in particular is formed as a hydraulic, electric, magnetic or piezoelectric actuating element.

11. Roll according to one of Claims 1 to 10, **characterized in that** at least one vibration sensor is arranged on the roll shell (2) and/or on the yoke (1) and/or on the supporting element and/or in the pressure chamber (8).

12. Roll according to one of Claims 7 to 11, **characterized in that** an actuator (24), in particular a piezoelectric element, is provided on the wall (16).

## Revendications

1. Rouleau, en particulier pour une machine à papier ou carton, comprenant une enveloppe de rouleau périphérique (2) et un mandrin fixe (1) qui traverse axialement l'enveloppe de rouleau (2), l'enveloppe de rouleau (2) pouvant être sollicitée radialement vers l'extérieur par la pression dans au moins une chambre de pression (8) et la chambre de pression (8) étant connectée par le biais d'un étranglement (10) à une conduite de fluide sous pression (12), et la chambre de pression (8) étant connectée à au moins un espace de pression (14) par le biais d'au moins un canal (13) qui présente un deuxième étranglement (11), lequel espace de pression présente un volume variable, **caractérisé en ce que** l'espace de pression (14) présente un volume maximal de 0,025 à 0,16 litre.

2. Rouleau selon la revendication 1, **caractérisé en ce que** la section transversale d'écoulement du deuxième étranglement (11) est une à deux fois plus grande que la section transversale d'écoulement de l'étranglement (10).

3. Rouleau selon la revendication 1 ou 2, **caractérisé en ce que** la chambre de pression (8) est disposée dans le mandrin (1), un élément de support (3) étant guidé dans la chambre de pression (8), lequel élément de support peut être pressé par un côté d'appui (4) contre l'enveloppe de rouleau (2) par une pression dans la chambre de pression (8).

4. Rouleau selon l'une quelconque des revendications 1 à 3, **caractérisé en ce que** l'espace de pression (14) est disposé à l'intérieur de la chambre de pression (8).

5. Rouleau selon la revendication 3, **caractérisé en ce que** l'espace de pression (14) est réalisé dans un évidement ou dans un alésage (18) dans le mandrin (1) entre les éléments de support (3).

6. Rouleau selon la revendication 5, **caractérisé en ce qu'**un canal respectif (13) s'étend à partir de l'espace de pression (14) vers les deux chambres de pression adjacentes (8).

7. Rouleau selon l'une quelconque des revendications 1 à 6, **caractérisé en ce que** l'espace de pression (14) est séparé d'une chambre (17) de manière étanche aux fluides par une paroi (16) mobile et/ou élastique, la chambre étant remplie d'un milieu compressible.

8. Rouleau selon l'une quelconque des revendications 1 à 5, **caractérisé en ce que** plusieurs espaces de pression (14) sont disposés les uns à côté des autres dans la direction axiale du rouleau.

9. Rouleau selon l'une quelconque des revendications 7 à 8, **caractérisé en ce que** la chambre (17) présente un raccord (23) ou est réalisée de manière hermétiquement étanche.

10. Rouleau selon l'une quelconque des revendications 1 à 9, **caractérisé en ce qu'**un certain nombre et/ou une surface en section transversale et/ou une longueur de l'étranglement (10) et/ou du deuxième étranglement (11) peuvent être modifiés au moyen d'au moins un élément de réglage qui est réalisé notamment sous forme d'élément de réglage hydraulique, électrique, magnétique, ou piézoélectrique.

11. Rouleau selon l'une quelconque des revendications 1 à 10, **caractérisé en ce qu'**au moins un capteur d'oscillation est disposé sur l'enveloppe de rouleau (2) et/ou sur le mandrin (1) et/ou sur l'élément de support et/ou dans la chambre de pression (8).

12. Rouleau selon l'une quelconque des revendications 7 à 11, **caractérisé en ce qu'**un actionneur (24), en particulier un élément piézoélectrique, est prévu sur la paroi (16).
